# EUROPEAN PATENT APPLICATION

(11) **EP 1 839 541 A1**
(43) Date of publication of application: **03.10.2007**
(21) Application number: 06006430.0
(22) Date of filing: 28.03.2006
(51) Int. Cl.: A47J 31/00

(54) **Process and apparatus for preparing beverage under controlled pressure**

(71) Applicant: Tuttoespresso S.p.a., 21042 Caronno Pertusella (VA) (IT)
(72) Inventor: Doglioni Majer, Luca, 22010 Carate Urio (Como (IT)
(74) Representative: Gislon, Gabriele

(57) **Abstract**

A process of preparing a beverage from a beverage preparation chamber comprises the steps of feeding water to the preparation chamber (2) until a first pressure (P1) is reached, interrupting the flow of water to the preparation chamber, holding said preparation chamber (2) in a closed condition for a first time interval (t₁), opening said outlet (3) of the preparation chamber (2) and delivering the thus prepared beverage.

## Description

The present invention relates to a process and an apparatus for preparing a beverage under controlled pressure. More particularly, this invention relates to beverage systems using preparation chambers containing ground or soluble products for the preparation of hot beverages such as coffee, tea, cappuccino or the like in dispensing machines.

Beverage dispensing machines are widely known and used. These machines are divided into two main groups: a first group make use of disposable containers of edible products, called pods, capsules or cartridges, that contain the ground, leaf or soluble product to be brewed or dissolved into hot water. The second group make use of a brewing chamber comprising one or two pistons, where the coffee powder (or other starting material) is brewed.

In both cases there has been a constant search for a better extraction/solubilization step and for a better and constant quality of the obtained beverage.

Methods and processes for obtaining the above improvements are known, that involve the continuous feeding of pressurized water to a cartridge or to a brewing chamber that is closed or substantially closed (i.e. there is a very small outlet opening), until a pressure sufficient to open up the capsule of sufficient to open a valve is reached.

WO02/076270 in the name of Tuttoespresso describes a unit system for the preparation of a beverage from a soluble product contained in a disposable cartridge that is comprising a collecting device with a housing means designed to contain the cartridge, wherein at least one throttling arrangement is provided along the flow of the beverage leaving the cartridge.

In WO04/030500, in the name of Tuttoespresso, the outlet is closed by using a perforating rod that has a diameter similar or greater than the diameter of the outlet opening in order to keep the outlet opening substantially closed during the hot water feeding step.

Closed cartridges that open upon reaching a sufficient pressure are also well known in the art.

US-A-5242702 in the name of Nestec discloses a plastic cartridge wherein the bottom is broken open by the pressure build-up that occurs upon feeding hot water to the cartridge, with the help of a puncturing means that opens the bottom of the cartridge towards the inside.

W02005080223, in the name of Tuttoespresso, discloses a single serve cartridge having an outlet lid portion located on a dispensing wall to form a dispensing opening after a liquid has been introduced into the capsule, that breaks open upon pressurizing the cartridge with hot water. According to this embodiment, the outlet has portions opening towards the outside of the cartridge to let out the beverage.

EP-A-1595817 in the name of ITACA makes use of this method: the special knurled-surface cartridge is pressurized by feeding hot water and "the pressurization of the water and of the inside of the cartridge is maintained until the breakable portions break because of the pressure".

EP-A-1364605, in the name of Sagliaschi et al. discloses a method of preparing a beverage in a hard plastic capsule that can resist deformation when pressurized by feeding hot water under pressure to said cartridge. Feeding of hot water is continued for an amount of time depending on the type of beverage and controlled by a timer. Eventually a piercing element perforates the bottom of the pressurized capsule to release the beverage. In order to withstand the increasing pressure, the capsule is made of hard rigid plastic with a thickness "calculated to make sure that the container has the necessary rigidity to withstand high pressure for long periods of time" (see para. 0034). Moreover, the capsule has to be housed within a "watertight container" (para. 0057) to avoid the capsule being deformed by the increasing pressure in the pressurization step.

All the above methods, therefore, require that hot water is fed to the cartridge and that this pressurizing step is continued at least until an outlet is produced. During the time that is required between the start of the water feeding step and the breaking or piercing of the bottom or the forming of the opening, the coffee powder is extracted or dissolved.

These methods have several drawbacks.

The main problem with these methods is that the infusion or brewing time is depending on the pressure of the water within the capsule, on the characteristics of the cartridge material, its manufacturing method and on the design of the cartridge outlet opening. The infusion/brewing time is therefore a variable rather than a constant; e.g. it was found that even minor changes in the cartridge material composition or in the pump efficiency or in the cartridge design would result in a different outcome of the beverage characteristics.

Therefore, the efficiency of the brewing and extraction step is also a variable and random feature of the beverage preparation.

This is true also in the case of above discussed EP-A-1364605, because a thinner area of the bottom of the capsule is required to form the outlet opening, this thinner area being subject to possible early opening.

In order to overcome this problem it was proposed to control the flow rate of the beverage from the brewing/infusion chamber. Such a method is disclosed e.g. in US-B-6382083, wherein a valve body is positioned at the outlet of a brewing chamber, and in EP application 04031014.6 wherein several parameters are varied to control the flow rate of the beverage from the infusion/brewing chamber. Still, these methods have not completely solved the above mentioned problem, the remaining variable parameters jeopardizing the reliability of the overall results.

Therefore, there is the need for an improved process and apparatus for preparing and dispensing beverages, particularly hot beverages, in an easy, reliable, cost-effective way. There is also the need to improve the existing processes without having to re-design the existing cartridges and apparatuses.

It is an object of the present invention to solve the above mentioned problems and provide an improved beverage preparing apparatus and process that can give excellent beverage.

Accordingly, the present invention provides a process of preparing a beverage wherein water is fed to a preparation chamber having a closed outlet, to prepare a beverage and dispensing the thus prepared beverage from an outlet of said chamber, characterized in comprising the following steps:
- feeding water to said preparation chamber until a first pressure is reached,
- interrupting the flow of water to said preparation chamber,
- holding said preparation chamber in a closed and pressurized condition for an amount of time t₁,
- delivering the thus prepared beverage.

The pressure to which reference is made in this description, unless otherwise specified, is the pressure measured in the hydraulic circuit, e.g. by pressure detectors located on said circuit, as disclosed hereinafter.

The pressure during the above mentioned holding step is substantially constant because the cartridge is closed. The flow of water to the preparation chamber is preferably resumed for delivering the required amount of beverage, especially if the preparation chamber is a brewing chamber containing e.g. ground coffee to be brewed.

The interruption and resuming of the flow of water to the preparation chamber can be repeated: thus the invention provides for a method wherein the flow of water to the preparation chamber is interrupted at least once while the preparation chamber is still closed.

The invention also relates to a beverage dispensing apparatus, comprising a beverage preparation chamber including an outlet and means for feeding water to said preparation chamber and reach a preset pressure, characterized in further comprising means for interrupting said water flow to said preparation chamber and for resuming said water flow after a preset time has elapsed.

The preparation chamber as above indicated is a cartridge or a brewing chamber comprising at least one piston, according to the apparatus type.

According to a first embodiment of the invention, the first pressure is lower than the opening pressure of the preparation chamber, i.e. the pressure at which the preparation chamber is open. In other words, the invention method provides for reaching a first pressure value (within the apparatus hydraulic circuit), interrupting the flow of water to the chamber to hold the chamber substantially at that pressure and then feeding again water to the preparation chamber to reach a second pressure, i.e. the pressure required for the opening of the cartridge. The pressure when the chamber is open can be, and usually is, different from the pressure during the step of dispensing the beverage.

If the chamber is a cartridge, or pod, it will be closed, apart for the water inlet means, during the pressure forming step and the pressure holding step. The cartridge is open either by a further increase of pressure, that will result in a breaking of the outlet, or by a piercing member, a perforator or similar means. Moreover, according to an embodiment of the invention reflecting WO04/03500, the capsule is perforated by the piercing member before feeding any water to it; in this condition there is no outlet opening, i.e. the cartridge is closed as far as beverage is concerned: no beverage is dispensed at this stage. The first pressure reached in the cartridge is such as not to deform the cartridge bottom and generate an opening; after the holding step has been performed for the time required, a second pressure is then obtained, such as to deform the capsule and generate the outlet opening for delivering the beverage.

If the chamber is a brewing chamber obtained in a cylinder and defined by at least one piston, the opening outlet will be closed and open by e.g. the use of an outlet opening provided with closing means. Suitable brewing chambers are provided e.g. with valve means. Suitable brewing chambers provided with a valve means are e.g. the brewing chambers disclosed in US-B-6382083 and in the prior art therein discussed, relating to valve elements that close the brewing chamber outlet against the flow of the water through the brewing chamber and that can be opened to dispense the beverage.

The beverage dispensing process and apparatus according to the present invention results in a number of advantages.

The extraction process can be controlled and is therefore more reliable: this results in a constant quality of the beverage.

The extraction process is more complete, because during the holding time, i.e. the time during which the capsule is held under pressure, without feeding water to it, the water can not only wet the beverage material, but, in the case of ground coffee, can also better penetrate the ground coffee particles pores and better extract the aromas, the flavours and all compounds that give the coffee beverage the required characteristics.

Though the extraction pressure (i.e. the first pressure, at which pumping water is discontinued) to be used in the invention method is within the range of 2 to 20 bar and preferably of 3 to 17, even a relatively low pressure is very effective: when a pressure comprised within the range of 3 to 8 bar is used in the pressure holding step, the method will provide excellent extraction. Thanks to this, a traditional cartridge can be used in a traditional coffee machine, without having to resort to the heavy, thick and rigid capsule of EP-A-1364605. Also, standard and not expensive pumps, e.g. those already known in the art for this purpose, can be used.

A further advantage is that the flow rate of the beverage from the preparation chamber is no longer so critical to the beverage quality because a good part of the extraction step is carried out during the holding step.

The invention will now be disclosed in greater detail with reference to the attached non limiting drawings, wherein:
- figure 1 is a schematic layout of an apparatus according to the invention;
- figure 2 is another schematic layout of an apparatus according to the invention;
- figure 3 is a further schematic layout of an apparatus according to the invention, and
- figures 4 and 5 are pressure diagrams showing the pressure values of the hydraulic circuit in a traditional extraction process and in an embodiment of the process according to the present invention.

For the scope of the present invention, the wording "ingredient" is encompassing any edible substance that mixed with water will result in a beverage for human consumption. For instance, the present invention may be used with cartridges filled with ground coffee, leaf tea, herbal remedies, granulated milk, or with soluble products such as coffee, chocolate or premixed cappuccino or lemon tea powders as well as concentrated fruit juices, artificial or natural flavouring agents, dressing powders such as cinnamon and similar products.

As previously explained, the invention also applies to an apparatus having a brewing chamber defined by a cylinder and at least a piston, for brewing coffee or other beverages.

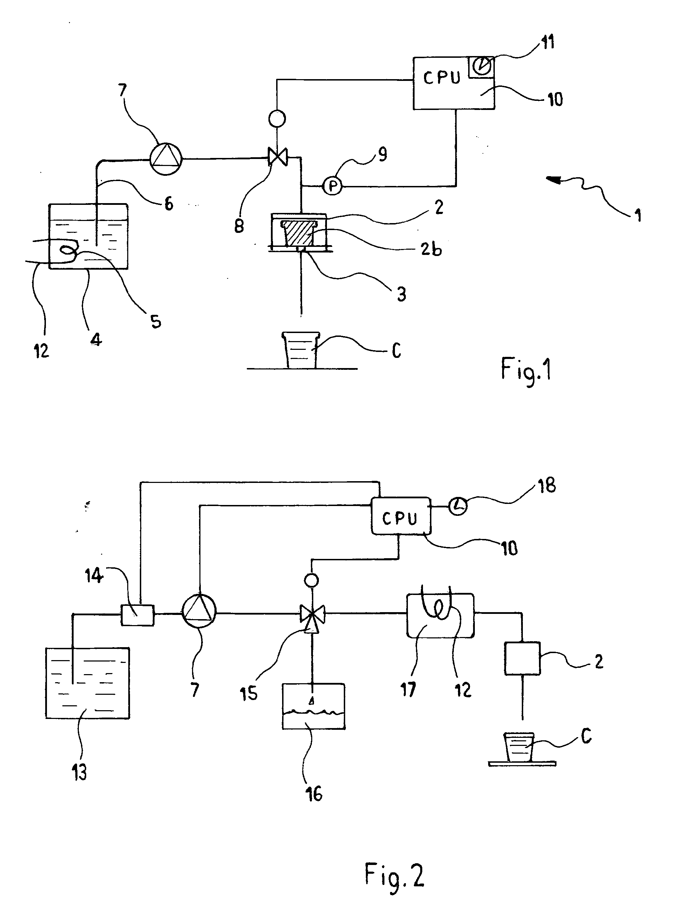

With reference to fig. 1, the beverage dispensing apparatus 1 comprises a beverage preparation chamber 2, including an outlet 3, containing the ingredient. In the shown embodiment the chamber is a cartridge 2b. The apparatus comprises in a way known per se means for feeding water to chamber 2 that include a water container 4 and a line 6 that reach chamber 2. A pump 7 is provided on line 6. Downstream of pump 7 is provided a valve 8 and a pressure detector 9 that is thus able to detect the pressure within the hydraulic circuit of the apparatus. As previously mentioned, the pressure referred to in description and claims refers to pressure measured in the hydraulic circuit, e.g. by detector 9.

Both the valve and the pressure detector are connected to a control unit 10, such as a CPU or a similar means. A timer 11 is included in or connected to control unit 10; control unit comprises, or is, a computerized or programmable unit set to operate the invention apparatus, including the pump and the valve means, according to the invention method, i.e. by interrupting the flow of water to the preparation chamber and preferably resuming it before or after the chamber is opened in order to deliver the beverage to the cup.

Heating means may be provided to control the water temperature.

For example, using heated water, according the present invention, the process of preparing a beverage, e.g. a coffee, provides that water heated by heating means 12 in water tank 4 is fed through pump 7 and valve 8 to the cartridge 2b acting as beverage preparation chamber. The cartridge outlet (or the chamber outlet when no cartridge is used) is initially closed.

Hot water feeding is continued until a first pressure value is reached within the chamber 2 and detected by pressure detector 9. This first pressure is generally within the range of 3 to 10 bars and preferably of about 5 bars. Once the required first pressure is reached and detected, pump 7 is stopped, or valve 8 is closed, or both things together. The cartridge is then held in this condition (pressure holding step) for a preset time t₁ that is usually within the range of 1 to 60 seconds, preferably 2 to 40 seconds and most preferably of 3 to 15 seconds.

In this pressure holding step, the chamber is still closed and the content of the preparation chamber is therefore kept in a pressurized container (chamber or cartridge) together with the water, i.e. with the extraction means. During this step the water will not only wet but also penetrate the ingredient, thus obtaining an excellent dissolution or extraction of the ingredient.

At the end of the pressure holding step, e.g. after 20 seconds, pump 7 is started again, valve 8 is open and the flow of water to the chamber is resumed.

The opening and beverage dispensing step can be carried out at said first pressure (that in this case would be e.g. 12 to 17 bar) or it could involve a step in which, after resuming the flow of water to the chamber 2, a second pressure is reached, higher than the first pressure reached and maintained at the pressure holding time, before or after the chamber is opened.

The opening of the chamber to deliver the prepared beverage is carried out according to the chamber features and can be a result of the increase of the pressure in the chamber or can be operated mechanically. A combination of the two features is also possible.

When the chamber is opened, a drop of pressure will usually occur; as a result of the pressure drop, removal of water penetrated into the coffee ground particles together with the aromas is performed.

The thus prepared beverage is then delivered to the final cup or container C. ln another embodiment of the invention, the control of the interruption is carried out by a timer, i.e. without making use of the pressure detector to this purpose. Such apparatus is disclosed in fig. 2, where the same numeral references have been used for the same components. In this apparatus, a water tank 13 is connected to pump 7 by a line on which a flow-meter 14 is mounted. Pump 7 is connected to a three-way valve 15 having a duct connected to a drip tray 16. Valve 15 is connected to water heating means 17, e.g. provided with an electric resistance 12, that is connected to preparation chamber 2. Chamber 2 may house a cartridge or be of the piston-defined type.

In this embodiment, the pump is operated by control unit 10 according to the time detecting unit 18 as follows.

In the first step valve 15 is opened to connect pump 7 to heater 17 and close duct to drip tray 16, and pump 7 is started; the time detecting means 18 begins measuring the lapsing time. The flow-meter 14 detects and regulate the amount of fed by the pump to the preparation chamber 2, in order to reach the required first pressure in chamber 2 after a time tₚᵤₘₚ has lapsed and, therefore, after an amount of water preset has been fed to chamber 2. After said time tₚᵤₘₚ, pump 7 is stopped and the pressure holding step is started for a time t₁. At the end of time t₁ , i.e. at the end of the pressure holding step, that will last for another time period t₁, e.g. 20 seconds, pump 7 is started again and chamber 2 is opened. At the end of the beverage dispensing step, operation of pump 7 is discontinued and valve 15 switched to connection with drip tray 16.

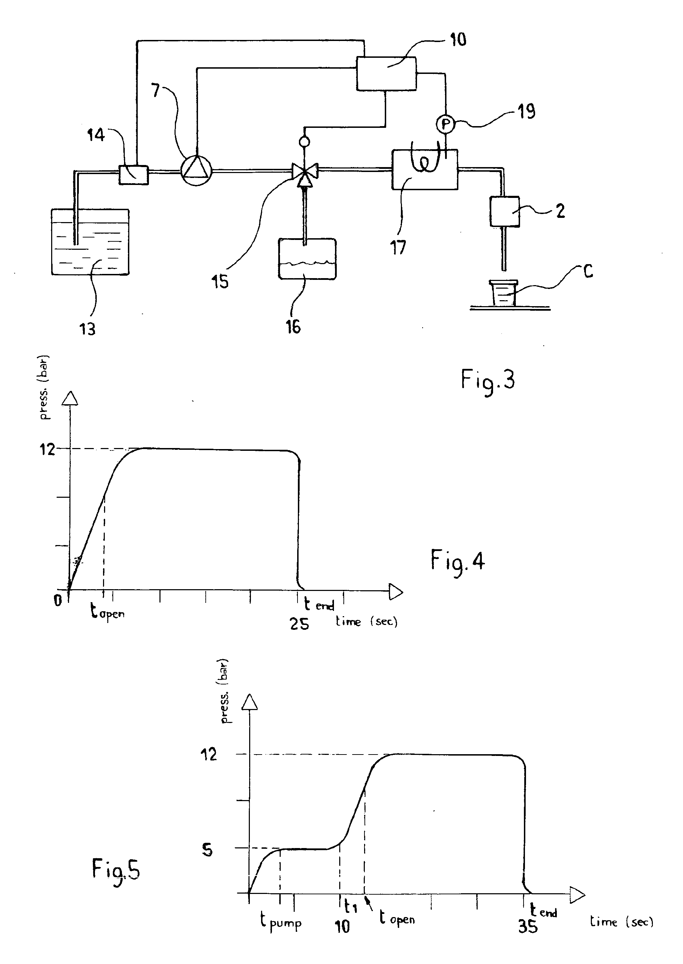

The embodiment shown in fig. 3 is almost corresponding to the embodiment of fig. 2 and the same references will be used for the same components of the apparatus. The difference with respect to the embodiment of fig. 2 lies in the use of a pressure detector and switch 19 mounted at the inlet of water heater 17 so as to detect the pressure in chamber 2.

The operation of this embodiment is similar to the method disclosed with reference to fig. 1; with valve 15 open, pump 7 is started, water is fed to heater 17 and from it to preparation chamber 2, that is closed. Once the pressure detector 19 senses that the first pressure, i.e. the pressure to be used in pressure holding time, has been reached it generates a signal to switch of, directly or through control unit 10, the pump 7.

After the required time t₁ (e.g. 25 seconds) has lapsed, i.e. at the end of pressure holding step, pump 7 operation is resumed and the preparation chamber is opened.

Figures 4 and 5 graphics schematically show the pressure profile of a known process (fig. 4) and of the process according to the invention. These graphs are simplified to better illustrate the steps of the method of the invention.

In fig. 4 the pressure increases with time until the chamber is opened at time = tₒₚₑₙ; the pressure then reaches the pressure of delivery of the beverage and remains substantially constant until the end of the dispensing cycle when the pump is stopped at t_{end}.

As shown in fig. 5, the invention provides for reaching a first pressure (5 bar in this figure) and for holding this pressure for a time interval t₁. In the shown preferred embodiment the pressure is again increased by resuming water feeding to the chamber, until time tₒₚₑₙ, when the chamber is opened. The remaining part of the beverage preparation process, i.e. the beverage dispensing step, is substantially identical to the corresponding beverage dispensing step in fig. 4, until the end of the process at t_{end}.

The invention will now be further disclosed with reference to the following

### examples.

In order to evaluate the consistency of the extraction and quality improvements utilising the teachings of the present invention, the Applicant has reproduced two sets of ten brewing cycles using the following parameters for both brewing cycles:
a) 7 grams of ground coffee, mainly of Robusta origin (75%)
b) Grinding set to obtain a particle size dimension -expressed as pondered average size- of 412 microns
c) water inlet temperature: 85°C.
d) water circuit pressure during dispensing: 12 bars
e) beverage volume: 40 cc.

In the first set of 10 brewing cycles the above parameters have been used to reproduce ten coffee beverages by means of a standard berwing cycles without any pre-brewing phase. The beverage dispensing time was 25 sec.

In the second set of ten brewing cycles the Applicant has introduced a pre-brewing pressurise-holding step according to the teaching of the present invention and particularly a pre-brewing phase lasting 10 seconds during which the brewing chamber and subsequently the ground, moistened coffee has been held at 5 bars pressure before resuming pressurised water feeding and opening the capsule at 12 bar pressure.

The results of ten consecutive brewing cycles bearing the mentioned parameters have been dried, separately for each of the ten brewing-cycle sets, in an oven at 105°C. for 30 minutes and the dry residue was then weighted, following the standardised UN18309 norm.

In the first set the calculated average dry residue had a value of 28%, in the latter case, involving a pressurised pre-brewing phase of 10" seconds, it had a value of 33%, with an average increase of 15%.

Similarly, increases in the total dry residue value were found using different sets of parameters, when comparing a cycle without pressurised pre-brewing phase with a cycle involving a pressurised pre-brewing phase following the teachings of this invention .

## Claims

1. A process of preparing a beverage wherein water is fed to a closed preparation chamber (2), to prepare a beverage, opening said chamber and dispensing the thus prepared beverage from an outlet (3) of said chamber, **characterized in** comprising the following steps:
- feeding water to said preparation chamber (2) until a first pressure (P1) is reached,
- interrupting the flow of water to said preparation chamber,
- holding said preparation chamber (2) in a closed condition for a first time interval (t₁),
- opening said outlet (3) of the preparation chamber (2) and
- delivering the thus prepared beverage.

2. A process according to claim 1, further comprising the step of resuming said flow of water to the said preparation chamber (2), at the end of said first time interval (t₁).

3. A process according to any previous claim, wherein said outlet of said preparation chamber is opened by a piercing element.

4. A process according to any claim 1 to 3, wherein said pressure is increased to at least partly open said preparation chamber outlet.

5. A process according to any previous claim, wherein said water flow is interrupted when a pressure within the range of 2 to 12 bar is reached.

6. A process according to any previous claim, wherein said water flow is interrupted when a pressure within the range of 3 to 8 bar is reached.

7. A process according to any previous claim wherein pressure holding time is within the range of 1 to 60 seconds.

8. A process according to any claim 1 to 6, wherein said beverage preparation chamber is comprising a cylinder, a piston and a valve means that is operated to open said chamber.

9. A beverage dispensing apparatus, comprising a beverage preparation chamber (2) including an outlet (3) and means (7) for feeding water to said preparation chamber and reach a preset pressure (P2), **characterized in** further comprising means (10, 15) for interrupting said water flow to said preparation chamber (2) and for opening said chamber after a first time (t₁) period has lapsed.

10. An apparatus according to claim 9, further comprising means (10) for resuming said water flow after a preset time interval (t₁).

11. An apparatus according to claim 9 or 10, further comprising means to open said preparation chamber.

12. An apparatus according to any claim 9 to 11, further comprising pressure detecting means (9, 19).

13. An apparatus according to any claim 9 to 11, further comprising a timer.

14. An apparatus according to any claim 9 to 13, wherein said beverage preparation chamber is a cartridge (2b).

15. An apparatus according to any claim 9 to 13, wherein said beverage preparation chamber comprises a piston and a cylinder.
